# EUROPÄISCHE PATENTSCHRIFT

(11) **EP 0 452 621 B1**
(45) Veröffentlichungstag und Bekanntmachung des Hinweises auf die Patenterteilung: **05.01.1994**
(21) Anmeldenummer: 91101267.2
(22) Anmeldetag: 31.01.1991
(51) Int. Cl.: B60T 17/08

(54) **Kombinierter Betriebsbrems- und Federspeicherbremszylinder für Bremsanlagen von Fahrzeugen, insbesondere Nutzfahrzeugen**
Combined service and spring brake cylinder for vehicle brake systems, especially for utility vehicles
Cylindre de frein de service et à ressort combiné pour systèmes de freinage de véhicules, notamment véhicules utilitaires

(30) Priorität: 30.03.1990 DE 4010363
(43) Veröffentlichungstag der Anmeldung: 23.10.1991
(73) Patentinhaber: KNORR-BREMSE AG, 80710 München (DE)
(72) Erfinder: Baumgartner, Hans, W-8052 Moosburg (DE)

(56) Entgegenhaltungen:
- DE-A- 1 818 010
- FR-A- 2 203 731
- FR-A- 2 491 416
- US-A- 3 717 072

## Beschreibung

Die Erfindung betrifft einen kombinierten Betriebsbrems- und Federspeicherbremszylinder nach dem Gattungsbegriff des Patentanspruches 1.

Zur Betätigung von Bremsen an Nutzfahrzeugen werden unter anderem kombinierte Betriebsbrems- und Federspeicherbremszylinder verwendet, so z.B. in LKW'S und Omnibussen, deren Radbremse als Keilspreizbremse ausgebildet ist. Ein derartiger Kombizylinder ist in Hintereinanderschaltung eine Kombination eines Betriebsbremszylinders für die Betätigung der Betriebsbremsanlage und eines Federspeicherbremszylinders für die Betätigung der Hilfs- und Feststellbremsanlage. Eine am Kombizylinder im Bereich des Federspeicherbremszylinders integrierte mechanische Löseeinrichtung ermöglicht bei Ausfall der Druckluft und bei ausgefahrenem, d.h. in Bremsposition befindlichem Federspeicherkolben das Lösen der Radbremse. Auch für S-Nocken-Trommelbremsen werden derartige kombinierte Betriebsbrems- und Federspeicherbremszylinder eingesetzt.

Die beengten baulichen Verhältnisse an Nutzfahrzeugen, aber auch die im Betrieb auftretenden starken mechanischen Belastungen machen es erforderlich, derartige Kombizylinder möglichst kompakt und leicht zu gestalten, so insbesondere bei neueren Bremsscheibenkonstruktionen, welche an Vorder- und Hinterachse von Nutzfahrzeugen verwirklicht werden. Herkömmliche Kombizylinder mit Hintereinanderschaltung von Betriebsbremszylinder und Federspeicherbremszylinder erweisen sich zum Einsatz in Scheibenbremsanlagen in den meisten Fällen nicht als geeignet, da sie aus baulichen Gründen an luftgefederten Hinterachsen und an Vorderachsen nicht einbaufähig sind; auch ist der Schwerpunkabstand herkömmlicher Kombizylinder von der Sattelführung einer Scheibenbremse im allgemeinen sehr groß, wenn nicht sogar zu groß, da starke Rüttelbeanspruchungen im Bereich des Führungslagers für den Kombizylinder auftreten.

Bei kombinierten Betriebsbrems- und Federspeicherbremszylindern der gattungsgemäßen Art (FR-A- 2 203 731) ist ein Betriebsbremskolben innerhalb eines größeren Durchmesser aufweisenden Federspeicherkolbens in einem gemeinsamen Gehäuse angeordnet, wobei ein vom Gehäuseboden axial sich in das Innere des Bremszylinders erstreckendes, rohrförmiges Führungsteil zur axialen Führung des Federspeicherkolbens vorgesehen ist. Hierbei ist ein gleichfalls axial sich erstreckendes, als Bestandteil des Federspeicherkolbens wirkendes Rohrteil vorgesehen, innerhalb welchem der Betriebsbremskolben verschiebbar angeordnet ist. Der Betriebsbremskolben ist getrennt vom Federspeicherkolben durch Druckmittel beaufschlagbar und wirkt auf eine Druckstange ein, gegenüber welcher in gleicher Weise der Federspeicherkolben einwirkt. Obwohl eine funktionelle Trennung von Federspeicherkolben und Betriebsbremskolben besteht, sind deren Bauteile derart miteinander gekoppelt, daß der Federspeicherkolben nicht isoliert vom Betriebsbremskolben ausgebaut oder gewartet werden kann.

Davon ausgehend besteht die Aufgabe der Erfindung darin, einen kombinierten Betriebsbrems- und Federspeicherbremszylinder der gattungsgemäßen Art so auszugestalten, daß er bei möglichst kurzer Baulänge eine sowohl funktionelle als auch bauliche Trennung der Betriebsbrems- und Federspeicherteile vermittelt. Insbesondere soll der kombinierte Betriebsbrems- und Federspeicherbremszylinder unter beengten räumlichen Verhältnissen an Nutzfahrzeugen eingesetzt werden können, so z.B. zur Betätigung der Zuspannmechanik von Scheibenbremsanlagen sowohl an der Vorderachse als auch an der Hinterachse von Nutzfahrzeugen bzw. Omnibussen. Bei im allgemeinen freitragender Befestigung des Kombizylinders soll hierdurch sichergestellt sein, daß der Schwerpunktabstand vom Führungslager der Scheibenbremsanordnung möglichst klein ist. Die den Kombizylindern eigene Funktionsfähigkeit, insbesondere bei Ausfall von Druckluft, soll bei Möglichkeit einfacher Wartung in vollem Umfang beibehalten werden.

Zur Lösung dieser Aufgabe dienen die Merkmale nach dem Kennzeichnungsteil des Patentanspruches 1.

Der Kurzbau-Kombizylinder behält trotz seiner achsial kurzen Bauweise seine volle Funktionsfähigkeit, da durch den großen Windungsdurchmesser der Speicherfeder eine günstige Federcharakteristik, d.h. geringe Kraftänderung über den Arbeitshub des Zylinders erreicht werden kann. Die Verwendung des Innengehäuses im gemeinsamen Gehäuse des Kombizylinders gestattet eine vollständige Trennung der Funktionen von Betriebsbremsteil und Federspeicherteil d.h. der Betriebsbremskolben ist abgedichtet gegenüber der Innenwand des Innengehäuses verschiebbar und ist unbeeinflußt von den Bewegungen des Federspeicherkolbens, welcher an der Außenwand des Innengehäuses gleichfalls unter Abdichtung verschiebbar ist. Die teilweise radiale Überlappung der Sekundärräume gestattet es, diese in einfacher Weise zu verbinden und mit einem gemeinsamen, nur in Richtung Außenluft öffnenden Rückschlagventil zu versehen, so daß eine hermetische Abdichtung der Sekundärräume und somit ein vollständiger Schutz gegen Eindringen von Feuchtigkeit und Schmutz gewährleistet ist. Die miteinander kommunizierenden Sekundärräume können in ihren Volumen so dimensioniert sein, daß ein gegenseitiger Volumenaustausch stattfindet, wenn der Betriebsbremskolben und/oder der Federspeicherkolben mit Druckluft beaufschlagt oder in Löseposition zurückgeführt werden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
Fig.1 ist eine Schnittansicht des Kurzbau-Kombizylinders, wobei die obere Schnitthälfte die Löseposition des Betriebsbremskolbens und des Federspeicherkolbens wiedergibt, während die untere Schnitthälfte die in Bremsstellung ausgefahrene Position der beiden Kolben wiedergibt;
Fig.2 ist eine gegenüber Fig.1 stark verkleinerte, schematische Seitenansicht des Kurzbau-Kombizylinders bei Verwendung an einer Scheibenbremsanlage.

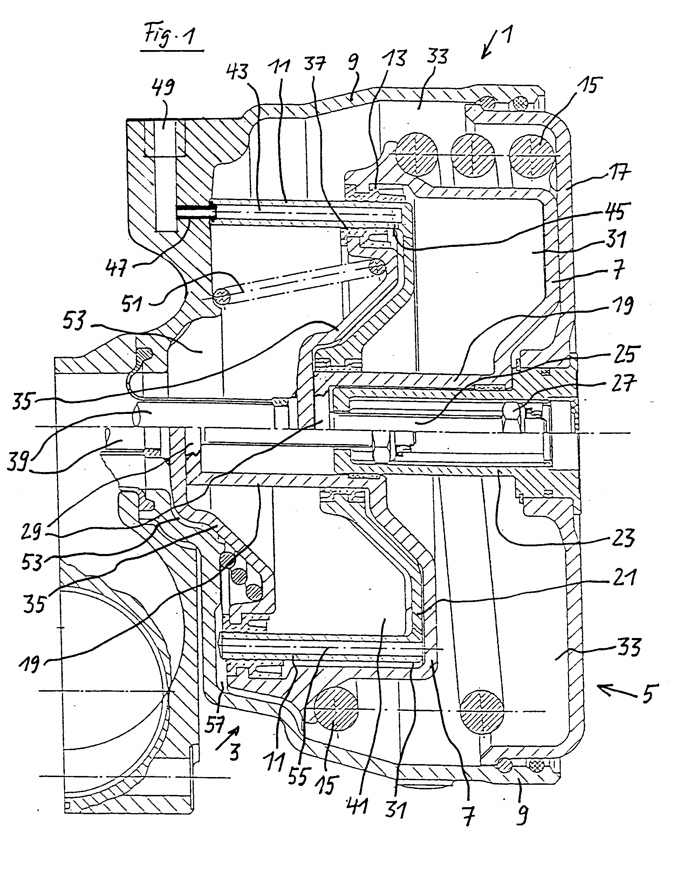

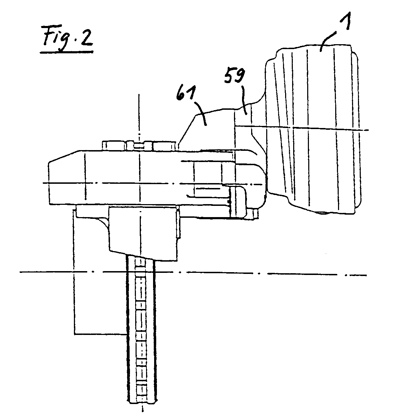

Der in Fig.1 und Fig.2 der Zeichnung dargestellte kombinierte Betriebsbrems- und Federspeicherbremszylinder ist gemäß der Erfindung als Kurzbau-Kombizylinder 1 ausgebildet und als solcher z.B. für pneumatische Scheibenbremsen vorgesehen. Der Kurzbau-Kombizylinder besteht wie an sich bekannte Kombizylinder aus einem Betriebsbremszylinder 3 und einem Federspeicherbremszylinder 5, welche in gleichfalls bekannter Weise getrennt voneinander oder in Kombination betätigbar sind. Der Federspeicherbremszylinder 5 weist einen Federspeicherkolben 7 auf, welcher topfförmig einen im Inneren des Gehäuses 9 des Kurzbau-Kombizylinders befindlichen Zylinder 11 übergreift. Der Zylinder 11 stellt hierbei das Gehäuse des Betriebsbremszylinders dar, wobei die Außenwand des Zylinder 11 Lauf- und Dichtfläche für den Federspeicherkolben 7 ist, d.h. der Federspeicherkolben 7 liegt mit einer Dichtung 13 an der Außenwand des Zylinders 11 an; die Speicherfeder 15 des Federspeicherbremszylinders 5 liegt einerseits am Federspeicherkolben 7 und andererseits am Boden 17 des Kurzbau-Kombizylinders 1 an. In der oberen Schnitthälfte von Fig.1 ist die gespannte Lage der Speicherfeder 15 wiedergegeben, während die untere Schnitthälfte von Fig.1 die entspannte Lage der Speicherfeder 15 wiedergibt, wie nachfolgend im einzelnen erläutert ist.

Der Federspeicherkolben 7 ist in seinem Mittelbereich mit einem achsial vorstehenden Kolbenrohr 19 versehen, welches stirnseitig, d.h. am linken Ende (Fig.1) mittels eines Endteils, geschlossen ist und sich unter Abdichtung durch den Boden 21 des Zylinders 11 hindurch erstreckt. Im Inneren des Kolbenrohrs 19 befindet sich eine an sich bekannte Löseeinrichtung mit einem Löserohr 23 und einer Spindel 25, auf welcher eine Mutter 27 verschraubt ist. Die Spindel 25 der Löseeinrichtung ist mit dem stirnseitigen, geschlossenenen Endteil 29 des Kolbenrohrs 19 verbunden. Mit Hilfe der Lösevorrichtung kann bei Ausfall der Druckluft für den Federspeicherbremszylinder die Bremse mechanisch gelöst werden. Dazu wird mit einem Werkzeug, z.B. einem Ringschlüssel, am Ende des Löserohr 23 angesetzt, um dieses gemeinsam mit der im Löserohr befindlichen Mutter 27 zu drehen. Dabei kommt die Mutter 27 zunächst am Ende des Löserohrs zum Anliegen, anschließend zieht die Spindel 25 den Federspeicherkolben 7 gegen die Kraft der Speicherfeder 15 zurück und die Bremse wird gelöst. Die Erfindung ist nicht auf die insoweit beschriebene Lösevorrichtung beschränkt, d.h. es können auch andere Vorrichtungen zum mechanischen Lösen des Federspeicherkolbens bei Ausfall der Druckluft verwendet werden.

Zwischen dem Boden 21 des Zylinders 11 und dem Federspeicherkolben 7 besteht eine Druckkammer 31 von variablem Volumen, welche in nachfolgend beschriebener Weise mit Druckluft beauftragbar ist, um den Federspeicherkolben 7 pneumatisch aus der in der unteren Schnitthälfte von Fig.1 wiedergegebenen Position gegen die Kraft der Speicherfeder 15 in die in der oberen Schnitthälfte von Fig.1 wiedergegebene Lage zu bewegen. Die Speicherfeder 15 des Federspeicherbremszylinders 5 befindet sich im sogenannten Sekundärraum 33 des Federspeicherbremszylinders, welcher über ein Rückschlagventil mit der Außenluft in Verbindung steht, um die bei Entlüften des Federspeicherkolbens auftretende Volumen- bzw. Druckänderung auszugleichen. In der zurückgezogenen, d.h. gespannten Position des Federspeicherkolbens 7 gemäß oberer Schnitthälfte von Fig.1 ist das Volumen des Sekundärraums 33 auf seinen kleinsten Wert reduziert, während es in der Position des Federspeicherkolbens gemäß unterer Schnitthälfte von Fig.1 den größten Wert besitzt.

Innerhalb des Zylinders 11 ist ein Betriebsbremskolben 35 vorgesehen, welcher mit einer Dichtung 37 an der Innenwand des Zylinders 11 geführt ist. Der Betriebsbremskolben 35 ist in an sich bekannter Weise mit einer Druckstange 39 verbunden, die sich aus dem Kurzbau-Kombizylinder in die Zuspannmechanik der Scheibenbremse erstreckt und zwischen der in der oberen Schnitthälfte von Fig.1 und der unteren Schnitthälfte dargestellten Postition bewegbar ist. Zwischen dem Betriebsbremskolben und dem Boden 21 des Zylinders 11 befindet sich die Druckkammer 41 des Betriebsbremszylinders; die Druckkammer 41 ist zum Zwecke normaler Betriebsbremsbetätigung der Scheibenbremse mit Druckluft beaufschlagbar, welche durch einen in der Wand des Zylinders 11 verlaufenden Kanal 43 und eine seitliche Bohrung 45 zugeleitet wird. In der aus der Zeichnung nach Fig.1 ersichtlichen Weise ist der Kanal 43 über eine abgedichtete Steckverbindung 47 an einen z.B. materialeinheitlich mit dem Gehäuse 9 verbundenen Druckluftanschluß 49 angeschlossen.

In bekannter Weise kann der Betriebsbremskolben 35 gegenüber einer Rückholfeder 51 wirken, welche in der oberen Schnitthälfte von Fig.1 wiedergegeben ist. Bei innerhalb des Zuspannmechanismus vorhandenen (nicht dargestellten) Rückholfedern, welche auf die Druckstange 39 einwirken, kann auf eine Rückholfeder innerhalb des Sekundärraums 53 des Betriebsbremszylinders verzichtet werden.

In der unteren Schnitthälfte von Fig.1 ist in der Wand des Zylinders 11 ein weiterer Kanal 55 dargestellt, welcher in vergleichbarer, in der Zeichnung nicht dargestellten Weise mittels eines Steckanschlusses oder dgl.an einen Druckluftanschluß angeschlossen ist und in die Druckkammer 41 mündet. Mit Hilfe des Kanals 55 kann Druckluft in die Druckkammer 41 eingeleitet werden, um den Federspeicherkolben 7 gegen die Kraft der Speicherfeder 15 in die in der oberen Schnitthälfte von Fig.1 dargestellte Position zu verspannen. Im umgekehrten Sinne kann Druckluft mittels des Kanals 55 freigegeben werden, so daß der Federspeicherkolben 7 unter der Verspannung der Speicherfeder 15 ausfährt und hierdurch die in der unteren Schnitthälfte von Fig.1 wiedergegebene Position einnimmt. Die untere Schnitthälfte nach Fig.1 läßt darüberhinaus erkennen, daß der Sekundärraum 53 des Betriebsbremszylinders mittels einer länglichen Ausnehmung 57 mit dem Sekundärraum 33 des Federspeicherbremszylinders verbunden ist. Für den gemeinsamen Sekundärraum von Betriebsbremszylinder und Federspeicherbremszylinder kann ein Luftaustritt z.B. über ein Rückschlagventil vorgesehen sein, wobei über das Rückschlagventil Luft aus dem Sekundärraum ausgeblasen wird, wenn sich der Betriebsbremskolben in Betätigungsrichtung bewegt bzw. der Federspeicherkolben in Richtung Boden 17 gelöst wird. Dieser Luftaustritt ist auch vorgesehen, um ein Abströmen einer geringfügigen Kolbenleckage zu gewährleisten.

Der Zylinder 11 kann als Aluminium-Fließpreßteil hergestellt sein, so daß sowohl die innere als auch die äußere Lauffläche bei der Formteilherstellung in endgültiger Qualität vorliegen. Zur Befestigung des Zylinders am Gehäuse 9 dienen (nicht dargestellte) Schrauben, welche unter Abstand zueinander von der Außenseite des Gehäuses 9 in die Wandstärke des Zylinders eingeschraubt sind, wobei die Steckverbindungen für die Druckluftanschlüsse des Federspeicherbremszylinders und des Betriebsbremszylinders jeweils im Freiraum zwischen zwei Schrauben vorgesehen sind und in den zugehörigen Kanal 43 bzw. 55 münden. Nach einer weiteren Variante der Befestigung des Zylinders ist dieser materialeinheitlich mit dem Gehäuse 9 gefertigt, d.h. z.B. im Druckguß hergestellt, wobei der Boden 21 als gesondertes Teil mittels abgedichteter Schraubverbindungen mit dem Zylinder 11 verbindbar ist. In jedem Fall ist durch eine derartige Verschraubung sichergestellt, daß zum Zwecke der Montage des Kurzhub-Kombizylinders zunächst das Einbringen des Betriebsbremskolbens 35 in das Gehäuse 9 möglich ist.

Die Wirkungsweise des Kurzhub-Kombizylinders entspricht prinzipiell derjenigen bekannter Kombizylinder, bei welchen Betriebsbremszylinder und Federspeicherbremszylinder hintereinander angeordnet sind. In Fig.1 der Zeichnung ist in der oberen Schnitthälfte die zurückgeschobene, d.h. gelöste Lage des Betriebsbremskolbens und des Federspeicherkolbens wiedergegeben. Der Federspeicherkolben ist durch Druckbeaufschlagung der Druckkammer 31 in die dargestellte Lage am Boden 17 verschoben, in welcher die Speicherfeder 15 folglich pneumatisch gespannt ist. Die über den Kanal 43 beschickbare Druckkammer 41 des Betreibsbremskolbens ist entlüftet, d.h., daß der Betriebsbremskolben 35 unter Einwirkung der im Zuspannmechanismus oder im Sekundärraum befindlichen Rückstellfeder in seine Anlageposition an den Boden 21 zurückgeführt ist. Wird die Druckkammer 41, ausgehend von der Position des Betriebsbremskolbens 35 in der oberen Schnitthälfte von Fig.1, mit Druckluft beaufschlagt, um die Scheibenbremse in normaler Weise zu betätigen, dann wird der Betriebsbremskolben ausgefahren, derart, daß die Druckstange 39 auf die Zuspannmechanik der Scheibenbremse einwirkt. Bei dieser normalen Betriebsbremsbetätigung verbleibt der Federspeicherkolben in seiner in der oberen Schnitthälfte von Fig.1 wiedergegebenen, zurückgeschobenen Lage. Zum Zwecke der Betätigung der Federspeicherbremse wird die Druckkammer 31 über den Kanal 55 entlüftet, so daß die Speicherfeder 15 den Federspeicherkolben 7 ausfährt. Da das Endteil 29 des Kolbenrohrs 19 in der Ausgangslage nach Fig.1 (obere Schnitthälfte) am Betriebsbremskolben anliegt, wird dieser bei Federspeicherbremsbetätigung vom Kolbenrohr 19 mitgenommen; in gleicher Weise ist es auch möglich, den Federspeicherkolben dem bereits betätigten, d.h. ausgefahrenen Betriebsbremskolben nachzufahren, wenn z.B. der Federspeicherbremszylinder als Feststellbremse verwendet wird. Ein besonderer Vorteil der die Sekundärräume miteinander verbindenden Bauweise des Kombizylinders besteht darin, daß der beim Ausfahren beider Kolben auftretenden Verkleinerung des Sekundärraums des Betriebsbremskolbens gleichzeitig eine Vergrößerung des Sekundärraums des Federspeicherkolbens gegenüber steht, d.h. die beiden Sekundärräume gleichen einander weitgehend im Luftvolumen aus, wobei ein eventuell verbleibender Restdruck durch die vorstehend beschriebene Außenluftverbindung entlastet wird.

Der beschriebene Kombizylinder von Kurzbauweise ist in universeller Weise an Scheibenbremsanlagen einsetzbar (Fig.2), wobei unter Verwendung gleicher Anschlußflansche 59 und 61 Kombizylinder unterschiedlicher Auslegung von Betriebsbremszylinder und Federspeicherbremszylinder verwendet werden können.

### Bezugszeichenliste

- 1: Kurzbau-Kombizylinder
- 3: Betriebsbremszylinder
- 5: Federspeicherbremszylinder
- 7: Federspeicherkolben
- 9: Gehäuse
- 11: Zylinder
- 13: Dichtung
- 15: Speicherfeder
- 17: Boden
- 19: Kolbenrohr
- 21: Boden
- 23: Löserohr
- 25: Spindel
- 27: Mutter
- 29: Endteil
- 31: Druckkammer
- 33: Sekundärraum
- 35: Betriebsbremskolben
- 37: Dichtung
- 39: Druckstange
- 41: Druckkammer
- 43: Kanal
- 45: Bohrung
- 47: Steckverbindung
- 49: Druckluftanschluß
- 51: Rückholfeder
- 53: Sekundärraum
- 55: Kanal
- 57: Ausnehmung
- 59: Anschlußflansch
- 61: Anschlußflansch

## Patentansprüche

1. Kombinierter Betriebsbrems- und Federspeicherbremszylinder für Bremsanlagen von Fahrzeugen, insbesondere Nutzfahrzeugen, mit in einem gemeinsamen Gehäuse (9) angeordneten Betriebsbrems- und Federspeicherkolben (35,7), von welchen der pneumatisch gegen Federkraft spannbare Federspeicherkolben (7) größeren Durchmesser als der Betriebsbremskolben (35) besitzt und bei Betätigung unter Mitnahme des Betriebsbremskolbens (35) auf eine gemeinsame Druckstange (39) zur Beaufschlagung eines Bremsmechanismus einzuwirken vermag, und von welchen der Betriebsbremskolben (35) unabhängig vom Federspeicherkolben (7) pneumatisch beaufschlagbar ist, um gelöst vom Federspeicherkolben (7) mittels der Druckstange (39) auf den Bremsmechanismus einzuwirken, gekennzeichnet durch folgende Merkmale:
a) innerhalb des beiden Bremszylindern gemeinsamen Gehäuses (9) ist ein aus einem Boden (21) und einem Zylinder (11) gebildetes Innengehäuse eingesetzt, innerhalb welchem der Betriebsbremskolben (35) verschiebbar geführt ist, wobei zwischen dem Betriebsbremskolben (35) und dem dem Federspeicherkolben (7) zugewandten Boden (21) des Innengehäuses (11,21) die pneumatisch beaufschlagbare Druckkammer (41) für den Betriebsbremskolben (35) besteht;
b) der Federspeicherkolben (7) umfaßt topfförmig das Innengehäuse (11 ,21) und ist mittels einer Dichtung (13) an der Außenwand des Innengehäuses verschiebbar geführt;
c) zwischen dem Boden (21) des Innengehäuses (11 ,21) und dem Federspeicherkolben (7) ist die Druckkammer (31) des Federspeicherkolbens gebildet;
d) der Federspeicherkolben (7) durchdringt mittels eines an seinem Ende geschlossenen Kolbenrohrs (19) achsialmittig und unter Abdichtung den Boden (21) des Innengehäuses (11,21), wobei das Endteil (29) des Kolbenrohrs (19) auf den Mittelbereich des innerhalb des Innengehäuses geführten Betriebsbremskolbens (35) einzuwirken vermag; und
e) die Speicherfeder (15) des Federspeicherkolbens (7) stützt sich in an sich bekannter Weise am Boden (17) des gemeinsamen Gehauses (9) und im Bereich des Außenumfangs des Federspeicherkolbens (7) ab, derart, daß sich der Federspeicherkolben in seinen Dehnungs- und Spannbewegungen im Freiraum radial außerhalb des Innengehäuses (11,21) und innerhalb der Wandung des gemeinsamen Gehäuses (9) befindet.

2. Kombinierter Betriebsbrems- und Federspeicherbremszylinder nach Anspruch 1, dadurch gekennzeichnet, daß das Innengehäuse (11,21) an dem dem Boden (21) entgegengesetzten Ende des Zylinders (11) mittels mehrerer Schrauben am gemeinsamen Gehäuse (9) befestigt ist, wobei die Schrauben unter Abstand zueinander die Wandung des Gehäuses (9) von außen durchdringen und in das stirnseitige Ende des Zylinders (11) eingeschraubt sind.

3. Kombinierter Betriebsbrems- und Federspeicherbremszylinder nach Anspruch 1 oder 2, dadurch gekennzeichnet, daß innerhalb der Wandstärke des Zylinders (11) Kanäle (43,55) verlaufen, welche einerseits in die Druckkammer (41) des Betriebsbremszylinders (3) und andererseits in die Druckkammer (31) des Federspeicherbremszylinders (5) münden, wobei die Kanäle (43,55) mittels abgedichteter Steckverbindungen (47) mit Druckluftanschlüssen außerhalb des Gehäuses (9) in Verbindung stehen, derart, daß mittels der Kanäle und ihrer Steckverbindungen Druckluft zum Beaufschlagen des Betriebsbremskolbens bzw. des Federspeicherkolbens zuführbar ist.

4. Kombinierter Betriebsbrems- und Federspeicherbremszylinder nach Anspruch 1 oder 2, dadurch gekennzeichnet, daß der die Speicherfeder (15) aufnehmende Sekundärraum (33) des Federspeicherbremszylinders (5) und der an der entgegengesetzten Seite bezüglich der Druckkammer (41) des Betriebsbremskolbens bestehende Sekundärraum (53) des Betriebsbremszylinders miteinander in Verbindung stehen, derart, daß ein gegenseitiger Volumen- und Druckaustausch bei Bewegungen vom Betriebsbremskolben und/oder Federspeicherkolben stattfinden.

5. Kombinierter Betriebsbrems- und Federspeicherbremszylinder nach Anspruch 4, dadurch gekennzeichnet, daß im Bereich der Verbindung des Zylinders (11) mit dem Gehäuse (9) Ausnehmungen (57) an der Innenseite des Gehäuses (9) vorgesehen sind und die beiden Sekundärräume miteinander verbinden.

6. Kombinierter Betriebsbrems- und Federspeicherbremszylinder nach Anspruch 4 oder 5, dadurch gekennzeichnet, daß die beiden Sekundärräume eine gemeinsame Außenluftverbindung in Form eines in Richtung Außenluft öffnenden Rückschlagventils besitzen und im übrigen gegen Außenluft vollständig abgedichtet sind.

7. Kombinierter Betriebsbrems- und Federspeicherbremszylinder nach Anspruch 1, dadurch gekennzeichnet, daß innerhalb des vom Federspeicherkolben (7) getragenenen Kolbenrohrs (19) eine an sich bekannte Löseeinrichtung angeordnet ist.

8. Kombinierter Betriebsbrems- und Federspeicherbremszylinder nach Anspruch 7, dadurch gekennzeichnet, daß die Löseeinrichtung ein durch ein Werkzeug drehbares Löserohr (23) aufweist, welches mittels einer von ihm drehbaren Mutter (27) auf eine mit dem Endteil (29) des Kolbenrohrs (19) verbundene Spindel (25) einwirkt.

9. Kombinierter Betriebsbrems- und Federspeicherbremszylinder nach einem der vorangehenden Ansprüche, dadurch gekennzeichnet, daß als Speicherfeder (15) eine Tellerfederanordnung vorgesehen ist.

## Claims

1. Combined service brake and spring loaded safety brake cylinder, for brake systems of vehicles, in particular commercial vehicles, having in a common housing (9) service brake and spring loaded pistons (35, 7), of which the spring loaded piston (7), pneumatically tensionable against spring force, has greater diameter than the service brake piston (35) and upon actuation is operable to act upon a common plunger (39), whilst carrying the service brake piston (35) along, to act upon a brake mechanism, and of which the service brake piston (35) can be pneumatically acted upon independently of the spring loaded piston (7), to act on the brake mechanism separately from the spring loaded piston (7) by means of the plunger (39), characterised by the following features:
a) a inner housing, formed of a base (21) and a cylinder (11), is set within the common housing (9) of the two brake cylinders, within which inner housing the service brake piston (35) is movably guided, the pressure chamber (41) for the service brake piston (35), which can be acted upon pneumatically, being formed between the service brake piston (35) and the base (21) of the inner housing (11, 21) facing towards the spring loaded piston (7);
b) the spring loaded piston (7) surrounds the inner housing (11, 21) in the form of a pot, and is movably guided on the outer wall of the inner housing by way of a seal (13);
c) the pressure chamber (31) of the spring loaded piston is formed between the base (21) of the inner housing (11, 21) and the spring loaded piston (7);
d) the spring loaded piston (7) penetrates the base (21) of the inner housing (11, 21) mid-axially and in a sealed manner by means of a closed piston barrel (19) on the end of the spring loaded piston, the end part (29) of the piston barrel (19) being operable to act on the middle region of the service brake piston (35) guided within the inner housing; and
e) the pre-loading spring (15) of the sping loaded piston (7) bears, in a manner known per se, on the base (17) of the common housing (9) and in the region of the outer periphery of the spring loaded piston (7) in such a manner that the spring loaded piston is located in the free space radially outward of the inner housing (11, 21) and within the walls of the common housing (9) in its compression and expansion movements.

2. Combined service brake and spring loaded safety brake cylinder according to claim 1, characterised in that the inner housing (11, 21) is attached to the common housing (9) at the end of the cylinder (11) opposite the base (21) by means of a plurality of bolts, the bolts being spaced apart one from another and penetrating the walls of the housing (9) from the outside and being screwed into the face end of the cylinder (11).

3. Combined service brake and spring loaded safety brake cylinder according to claim 1 or 2, characterised in that channels (43, 55) run within the wall thickness of the cylinder (11) and open, on the one hand, into the pressure chamber (41) of the service brake cylinder (3) and, on the other hand, into the pressure chamber (31) of the spring loaded safety brake cylinder (5), the channels (43, 55) being connected with compressed air connections outside the housing (9) by way of sealed plug-in connections (47) in such a manner that compressed air for acting on the service brake piston or the spring loaded piston can be supplied by way of the channels and their plug-in connections.

4. Combined service brake and spring loaded safety brake cylinder according to claim 1 or 2, characterised in that the secondary chamber (33) of the spring loaded safety brake cylinder (5), accommodating the pre-loading spring (15), and the secondary chamber (53) of the service brake cylinder, formed on the opposite side of with respect to the pressure chamber (41) of the service brake piston, are connected with one another in such a manner that a reciprocal exchange of pressure and volume takes place with movements of the service brake piston and/or the spring loaded piston.

5. Combined service brake and spring loaded safety brake cylinder according to claim 4, characterised in that recesses (57) which connect the two secondary chambers with one another are provided on the inner side of the housing (9) in the region of the attachment of the cylinder (11) to the housing (9).

6. Combined service brake and spring loaded safety brake cylinder according to claim 4 or 5, characterised in that the two secondary chambers possess a common connection to outside air, in the form of a non-return valve opening towards the outside air, otherwise being completely sealed against outside air.

7. Combined service brake and spring loaded safety brake cylinder according to claim 1, characterised in that a release mechanism, known per se, is arranged within the piston barrel (19) carried by the spring loaded piston (7).

8. Combined service brake and spring loaded safety brake cylinder according to claim 7, characterised in that the release mechanism has a release tube (23), rotatable with a tool, which acts upon a spindle (25), connected to the end part (29) of the piston barrel (19), by way of a nut (27) rotatable by the tube.

9. Combined service brake and spring loaded safety brake cylinder according to any preceding claim, characterised in that a plate spring arrangement is provided as pre-loading spring (15).

## Revendications

1. Ensemble combiné formé d'un cylindre de frein de service et d'un cylindre de frein à ressort accumulateur pour des installations de freinage de véhicules, notamment de véhicules utilitaires, comportant un piston (35) du frein de service et un piston (7) à ressort accumulateur, qui sont disposés dans un carter commun (9) et parmi lesquels le piston (7) à ressort accumulateur, qui peut être armé pneumatiquement à l'encontre de la force d'un ressort, possède un diamètre supérieur à celui du piston (35) du frein de service, et peut agir lors de son actionnement, moyennant l'entraînement du piston (35) du frein de service, sur une tige de pression commune (39) servant à charger un mécanisme de frein, et le piston (36) du frein de service peut être chargé pneumatiquement indépendamment du piston (7) à ressort accumulateur, de manière à agir, au moyen de la tige de pression (39) sur le mécanisme de frein, séparément du piston (7) à ressort accumulateur, caractérisé par les particularités suivantes :
a) à l'intérieur du carter (9) commun aux deux cylindres de frein est inséré un carter intérieur, qui est formé par un fond (21) et un cylindre (11) et à l'intérieur duquel le piston (35) du frein de service est guidé en déplacement, la chambre de pression (40), qui peut être chargée pneumatiquement, pour le piston (35) du frein de service étant formée entre le piston (35) du frein de service et le fond (21), tourné vers le piston (7) a ressort accumulateur, du carter intérieur (11,21);
b) le piston (7) à ressort accumulateur enserre, avec une forme de pot, le carter intérieur (11,21) et est guidé en déplacement au moyen d'une garniture d'étanchéité (13) contre la paroi extérieure du carter intérieur;
c) la chambre de pression (31) du piston à ressort accumulateur est formée entre le fond (21) du carter intérieur (11,21) et le piston (7) à ressort accumulateur;
d) le piston (7) à ressort accumulateur traverse en position centrée axialement et en établissant l'étanchéité, le fond (21) du carter intérieur (11,21), par un tube (19) fermé à son extrémité, la partie d'extrémité (19) du tube (29) du piston pouvant agir sur la partie médiane du piston (35) du frein de service, qui est guidé à l'intérieur du carter intérieur; et
e) le ressort accumulateur (15) du piston (7) à ressort accumulateur prend appui d'une manière connue en soi contre le fond (17) du carter commun (9) et dans la zone de la périphérie extérieure du piston (7) à ressort accumulateur de telle sorte que le piston à ressort accumulateur est disposé radialement dans l'espace libre, lors de ses déplacements d'extension et de serrage, radialement à l'extérieur du carter intérieur (11,21) et l'intérieur de la paroi du carter commun (9).

2. Ensemble combiné formé d'un cylindre de frein de service et d'un cylindre de frein à ressort accumulateur suivant la revendication 1, caractérisé par le fait que le carter intérieur (11,21) est fixé, au niveau de l'extrémité du cylindre (11) située à l'opposé du fond (21), au moyen de plusieurs vis au carter commun (9), les vis traversant de l'extérieur la paroi du carter (9) en étant séparées par une distance réciproque, et étant vissées dans l'extrémité frontale du cylindre (11).

3. Ensemble combiné formé d'un cylindre de frein de service et d'un cylindre de frein à ressort accumulateur suivant la revendication 1 ou 2: caractérisé par le fait que dans l'épaisseur de la paroi du cylindre (11) s'étendent des canaux (43,55), qui débouchent, d'une part, dans la chambre de pression (41) du cylindre (3) du frein de service, et, d'autre part, dans la chambre de pression (31) du cylindre (5) du frein à ressort accumulateur, les canaux (43,55) étant réunis, au moyen de liaisons enfichables étanchéifiées (47), aux raccords à air comprimé à l'extérieur du carter (9) de sorte que l'air comprimé peut être envoyé par l'intermédiaire des canaux et de leurs liaisons à enfichage, pour charger le piston du frein de service ou le piston du frein à ressort accumulateur.

4. Ensemble combiné formé d'un cylindre de frein de service et d'un cylindre de frein à ressort accumulateur suivant la revendication 1 ou 2, caractérisé par le fait que la chambre secondaire (33), qui loge le ressort accumulateur (15), du cylindre (5) du frein à ressort accumulateur, et la chambre secondaire (53), qui existe sur le coté opposé par rapport à la chambre de pression (41) du piston du frein de service, du cylindre du frein de service sont reliées entre elles de sorte qu'il se produit un échange réciproque du point de vue volume et pression dans le cas de déplacements du piston de frein de service et/ou du piston du frein à ressort accumulateur.

5. Ensemble combiné formé d'un cylindre de frein de service et d'un cylindre de frein à ressort accumulateur suivant la revendication 4, caractérisé par le fait que dans la zone de la liaison entre le cylindre (11) et le carter (9) sont prévues, au niveau de la face intérieure du carter (9), des ouvertures (57) qui relient les deux chambres secondaires.

6. Ensemble combiné formé d'un cylindre de frein de service et d'un cylindre de frein à ressort accumulateur suivant la revendication 4 ou 5, caractérisé par le fait que les deux chambres secondaires possèdent une liaison commune de passage de l'air extérieur sous la forme d'une soupape antiretour qui s'ouvre en direction de l'air extérieur et sont par ailleurs entièrement étanchéifiées vis-à-vis de l'air extérieur.

7. Ensemble combiné formé d'un cylindre de frein de service et d'un cylindre de frein à ressort accumulateur suivant la revendication 1, caractérisé en ce qu'un dispositif de dégagement ou de désserrage, connu en soi, est disposé à l'intérieur du tube (19), qui est porté par le piston (7) à ressort accumulateur.

8. Ensemble combiné formé d'un cylindre de frein de service et d'un cylindre de frein à ressort accumulateur suivant la revendication 7, caractérisé par le fait que le dispositif de dégagement possède un tube de dégagement (23) que l'on peut faire tourner à l'aide d'un outil et qui agit, au moyen d'un écrou (27) entraîné en rotation par ce tube, sur une broche (25) reliée à la partie d'extrémité (29) du tube (19) du piston.

9. Ensemble combiné formé d'un cylindre de frein de service et d'un cylindre de frein à ressort accumulateur suivant l'une des revendications précédentes, caractérisé par le fait qu'il est prévu, comme ressort accumulateur (15), un ensemble de ressorts Belleville.
